# EUROPÄISCHE PATENTSCHRIFT

(11) **EP 1 047 883 B1**
(45) Veröffentlichungstag und Bekanntmachung des Hinweises auf die Patenterteilung: **09.06.2004**
(21) Anmeldenummer: 99900045.8
(22) Anmeldetag: 13.01.1999
(51) Int. Cl.: F16D 3/32

(54) **DOPPELGELENK FÜR LENKWELLEN IN KRAFTFAHRZEUGEN**
DOUBLE JOINT FOR STEERING AXLES IN AUTOMOBILES
JOINT DE CARDAN DOUBLE POUR ARBRES DE DIRECTION DANS DES VEHICULES AUTOMOBILES

(30) Priorität: 19.01.1998 CH 10798
(43) Veröffentlichungstag der Anmeldung: 02.11.2000
(73) Patentinhaber: ThyssenKrupp Presta AG, 9492 Eschen (LI)
(72) Erfinder: HEUTSCHI, Gerhard, FL-9494 Schaan (LI); LUTZ, Christian, A-6714 Nüziders (AT)
(74) Vertreter: Wegmann, Urs
(86) Internationale Anmeldenummer: PCT/CH1999/000012
(87) Internationale Veröffentlichungsnummer: WO 1999/036707

(56) Entgegenhaltungen:
- EP-A- 0 560 058
- WO-A-95/12073
- FR-A- 2 730 774
- GB-A- 913 365
- GB-A- 2 017 256
- US-A- 5 376 723

## Beschreibung

Die Erfindung betrifft ein Lenkwellendoppelgelenk für Kraftfahrzeuge nach dem Oberbegriff des Patentanspruches 1.

Eine bekannte Doppelgelenkanordnung ist beispielsweise das Doppelkreuzgelenk mit zwischen den beiden Gelenkkreuzen angeordnetem Kugelgelenk. Bei diesen bekannten Anordnungen von Doppelkreuzgelenken sind jeweils zwei Gelenkkreuze um die eine Gelenkkreuzachse beweglich mit je einer Gabel an den beiden Wellenenden und um die andere Gelenkachse beweglich an einem Verbindungsgehäuse verbunden. Die Mittenzentrierung erfolgt durch eine Gelenkverbindung beider Wellenenden innerhalb des Verbindungsgehäuses aus einer metallischen Gelenkkugel an dem einen Wellenende und einem zylindrischen, ebenfalls metallischen Aufnahme an dem anderen Wellenende, in welches die Gelenkkugel eingreift. Das Verbindungsgehäuse bildet im Innern einen Hohlraum aus, der ein Freiraum für die Bewegung der zentrierenden Gelenkverbindung schafft und in seiner Grösse auf den maximalen Winkelausschlag der beiden Wellenenden gegenüber der gestreckten Achse abgestimmt ist. Die Enden bzw. die Zapfen der beiden Gelenkkreuze sind für gute Leichtgängigkeit entsprechend gelagert, beispielsweise mit Wälzlagern, welche in Bohrungen der Gabelarme bzw. im Verbindungsgehäuse angeordnet sind. Die Kreuzgelenklagerung mit ihren acht Lagerstellen, sowie die zentrale Kugellagerung erfordert hohe Präzision, um Leichtgängigkeit des Doppelkreuzgelenkes gewährleisten zu können. Ein leichter Versatz der beiden Wellenachsen innerhalb der Kippebene kann beispielsweise zu Verklemmungen in bestimmten Positionen führen, was die Leichtgängigkeit stark beeinträchtigen kann. Ausserdem führt dies auch zu unerwünschten Abnutzungserscheinungen. Um solche Nachteile zu begrenzen, müssen die Lagerungen entsprechend präzise ausgeführt werden, was bei der Herstellung hohe Kosten verursacht. Eine weitere bekannte Möglichkeit, das Problem zu verringern, besteht darin, im Bereich der Zapfen der Kreuzgelenklager gummielastisches Material als Einlage so vorzusehen, dass sich die Lager über die so erreichte, leichte Federbeweglichkeit in Bezug auf Fertigungstoleranzen einstellen können und gleichzeitig eine schwingungsdämpfende Wirkung haben. Eine gummielastische Lagerung von zwei bis zu allen acht Kreuzgelenkzapfen ist einschränkend, wenn kleine Baugrössen gefordert sind und ist in der Realisation aufwendig und teuer.

In der EP-A-0 560 058 ist ein Lenkwellendoppelgelenk für Kraftfahrzeuge offenbart mit einem die Wellenenden verbindenden Kugelgelenk, wobei die Kugel an dem einen Wellenende in einer elastischen Kunststoffauskleidung in der Aufnahme des anderen Wellenendes federnd gelagert ist.
Ein weiteres Lenkwellendoppelgelenk ist in der WO-A-95/12073 beschrieben. Die Kugelaufnahme enthält hierbei eine Büchse zur Aufnahme der Kugel, welche unmittelbar fest mit der Kugelaufnahme verbunden ist.
In der Schrift GB-A-913 365 wird ein weiteres Kugelgelenk beschrieben. Bei diesem Kugelgelenk ist die Kugel mit einer in der Aufnahme axial beweglichen, die Kugel drehbeweglich aufnehmenden Kunststoffgleitführung gelagert.

Es ist Aufgabe der vorliegenden Erfindung, ein Lenkwellendoppelgelenk vorzuschlagen, bei welchem die Nachteile des Standes der Technik behoben werden. Insbesondere besteht die Aufgabe darin, ein Doppelgelenk zu realisieren, welches neben der Leichtgängigkeit einfach zu montieren ist, kostengünstig herstellbar und unempfindlich auf Fertigungstoleranzen ist.

Die Aufgabe wird erfindungsgemäss durch die Anordnung nach dem kennzeichnenden Teil des Anspruchs 1 gelöst. Die abhängigen Ansprüche definieren weitere vorteilhafte Ausführungsformen.

Erfindungsgemäss wird die Aufnahme für die Kugel, welche die beiden Wellenenden beweglich verbinden, federnd bzw. elastisch ausgebildet. Dies erlaubt ein sehr kostengünstige Ausführung, da der Toleranzausgleich durch die federnde Lagerung nur einmal ausgeführt werden muss.

Die Kugel auf dem einen Wellenende wird vorzugsweise in der Aufnahme des anderen Wellenendes so gelagert, dass die Aufnahme für die Kugel als Gleitbüchse ausgebildet ist und diese Büchse die Kugel zylindrisch umschliesst. Die Büchse ihrerseits wird federnd gelagert, indem zwischen der Büchse und der Aufnahme ein elastisches Material, vorteilhafterweise ein gummielastisches Material mit einer shore-Härte im Bereich von 30 bis 80 shore vorgesehen ist. Gute elastische Bewegungen der Büchse werden dadurch erreicht, indem die shore-Härte im Bereich von 30 bis 60 shore gewählt wird.

Das elastische Material zwischen der am Wellenende beispielsweise topfförmigen Aufnahme und der Gleitbüchse, welche vorteilhafterweise einen kreisrunden Querschnitt aufweist, kann für die Festlegung einer günstigen elastischen Auslenkung profiliert werden. Vorzugsweise wird die Aussenwandung des zylinderförmigen Teiles wellförmig ausgebildet.

Die Gleitbüchse, in welcher die Kugel gleitet und dreht, ist aus einem Gleitlagermaterial gefertigt, wobei eine solche Büchse auch eine Gleitbeschichtung aufweisen kann. Besonders geeignet sind aber Büchsen aus einem Sintermetall mit Traghülse.

Die Büchse selbst sollte so ausgeführt werden, dass sie zusammen mit der Kugel eine spielfreie Lagerung ausbildet. Dies wird dadurch erreicht, dass die Gleitbüchse mit einer gewissen Vorspannung und somit spielfrei sich an der Kugel federelastisch anlegt. Eine Schlitzung der Aussenwand der Gleitbüchse ermöglicht dies so, dass die Gleitbüchse in radialer Richtung atmen kann. Auf diese weise werden sowohl radiale Toleranzen beispielsweise des Kugeldurchmessers aufgenommen und über die elastische Lagerung der Büchse Toleranzabweichungen der Wellenachsen ausgeglichen. Ausserdem werden durch den elastischen Ausgleich die Verschleissraten kompensiert.

Eine weitere vorteilhafte Ausführungsform besteht darin, dass eine Kunsstofführung auf der Gelenkkugel aufgebracht ist, wobei dann die Kunststofführung in der Gleitbüchse oder der zylindrischen Aufnahme selbst gleitet. In diesem Fall ist es möglich, die Büchse oder die Aufnahme auch ohne spezielles Lagermaterial herzustellen. Die Lagerbüchse kann sogar weggelassen werden und das, sich an der Kugel haltende, Kunststoffteil gleitet dann unmittelbar geführt in der Aufnahmehülse. Eine federnd gelagerte Büchse kann dann entfallen.

Bei Doppelkreuzgelenkanordnungen insbesondere vorerwähnter Art ist es ausserdem wichtig, dass bei der Montage des Gelenkes eine Führung vorhanden ist, welche das Kugelgelenk auf gezielte Art zusammenführt und ausserdem dass bei Extremendpositionen des Gelenkes, welche nicht dem normalen Betriebsfall entsprechen, aus Sicherheitsgründen ein definierter Anschlag vorgesehen ist. Durch entsprechende Ausbildung des Verbindungsgehäuses im Innenbereich mit entsprechenden umlaufenden Anschlagflächen kann dies definiert werden. Es ist darauf zu achten, dass insbesondere die Aufnahme, welche die federelastisch gelagerte Büchse trägt, in Extremposition zuerst am Anschlag anliegt und darauf folgend erst die Gelenkkugel an einer zweiten Anschlagfläche aufliegt. Damit wird, vor allem in nicht eingebautem Zustand, gewährleistet, dass der Anschlag in Extremposition abgedämpft wird. Diese Art der Anschlagsdefinition ist für die vorliegende erfindungsgemässe, federelastische Kugelgelenkslagerung besonders geeignet, kann aber auch vorteilhafterweise bei anderen Doppelkreuzgelenken ohne federelastische Kugelgelenklagerung eingesetzt werden.

Für Doppelgelenkanordnungen eignen sich auch andere Ausführungen als Kreuzgelenke. Wenn beispielsweise besonders hohe Leichtgängigkeit und gleichförmige Bewegungen gefordert werden, wird das Doppelgelenke vorzugsweise mit je einem Universalgelenk, auch homokinetisches Gelenk genannt, insbesondere der Bauart Gleichlauf-Festgelenk, realisiert. Zwischen den beiden Gelenken, welche mit einem Gehäuse verbunden sind, ist dann wiederum das Kugelgelenk mit der federelastischen Lagerung angeordnet, wodurch die wellenenden über die beiden Gelenke knickbeweglich gelagert sind. Gleichlauf-Festgelenke werden beispielsweise als Löbro-Gelenke von der Firma Löhr & Bromkamp GmbH, DE 6050 Offenbach, hergestellt.

Die Erfindung wird nun nachfolgend anhand von Ausführungsbeispielen mit schematischen Figuren näher erläutert. Es zeigen:
- Fig. 1: schematisch und im Schnitt eine erfindungsgemässe Ausführung eines Lenkwellendoppelkreuzgelenkes
- Fig. 2: schematisch und im Schnitt eine weitere erfindungsgemässe Ausführung eines Lenkwellendoppelkreuzgelenkes um 90° versetzt und mit Anschlagmittel zur Begrenzung der Auslenkung
- Fig. 3a: im Querschnitt eine Lagerbüchse mit wellförmig gummielastischem Material
- Fig. 3b: eine Seitenansicht der Büchse mit elastischem Material gemäss Figur 3a
- Fig. 4: schematisch und im Schnitt eine Variante einer erfindungsgemässen Ausführung eines Lenkwellendoppelkreuzgelenkes mit einer Kunststoffgleitführung
- Fig. 5a: schematisch und im Querschnitt eine Kunststoffgleitführung im nicht eingebauten Zustand
- Fig. 5b: schematisch und im Längsschnitt eine Kunststoffgleitführung im nicht eingebauten Zustand
- Fig. 6a: schematisch und im Querschnitt eine Kunststoffgleitführung im eingebauten Zustand
- Fig. 6b: schematisch und im Längsschnitt eine Kunststoffgleitführung im eingebauten Zustand

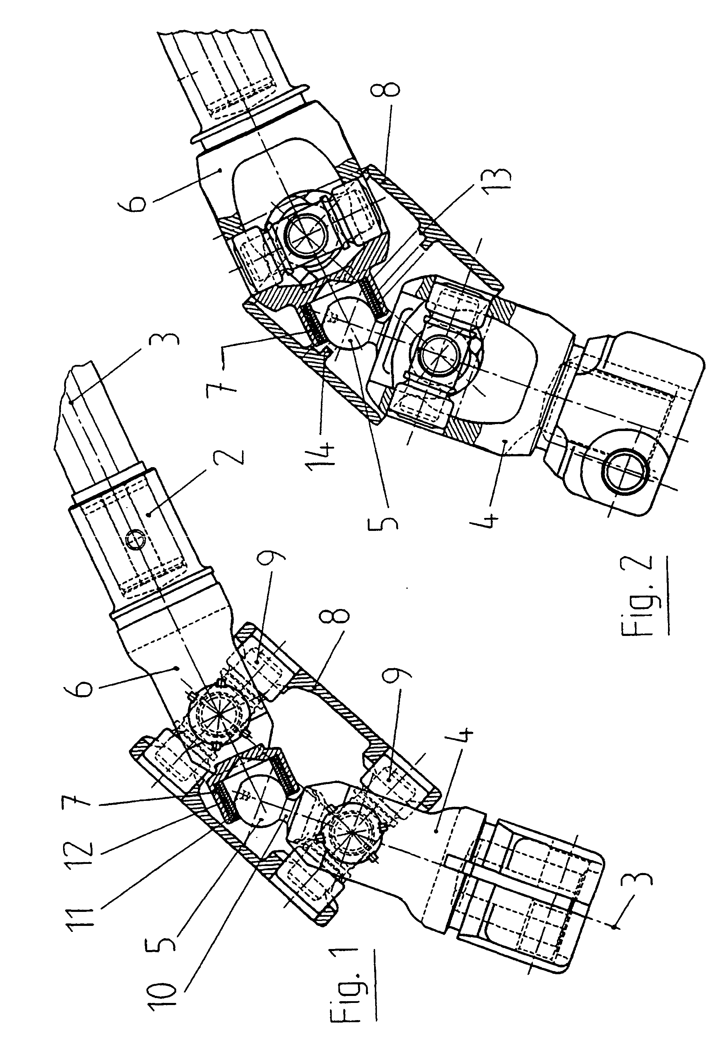

In den Figuren 1 und 2 ist ein erfindungsgemässes Lenkwellendoppelkreuzgelenk im Querschnitt dargestellt. Das Gelenk besteht aus einem Verbindungsgehäuse 8 bzw. einer Rohrdoppelgabel 8, in welchem beweglich gelagert zwei Gelenkkreuze 9 angeordnet sind. Die Wellenenden 2 und 3 sind über die Gabeln 4 und 6, welche an den Gelenkkreuzen 9 gelagert sind, über die Kugel 5 mit der Aufnahme 7 gelenkbeweglich verbunden.

Die Aufnahme 7 ist gleitbüchsenförmig ausgebildet bzw. nimmt eine zylinderförmige Gleitbüchse auf, welche entweder mit einem Gleitmaterial, beispielsweise einem Gleitmetall, beschichtet ist oder aus einem Gleitmaterial wie vorzugsweise einem Sintermetall mit Traghülse besteht. Um einen entsprechend geeigneten Toleranzausgleich möglich zu machen, ist diese Büchse 11 gegenüber der Aufnahme 7 federelastisch gelagert. Diese Lagerung erfolgt dadurch, dass zwischen der Gleitbüchse 11 und der Aufnahme 7 ein federelastisches Material 12 vorgesehen ist, vorzugsweise ein gummielastisches Material. Das gummielastische Material kann, um den Federweg weiter bestimmen zu können, auch profiliert werden, beispielsweise wellartig. Das Material besteht vorzugsweise aus Elastomeren mit einer shore-Härte im Bereich von 30 bis 80 shore, wobei besonders gute Resultate erzielt werden im Bereich von 30 bis 60 shore.

In Figur 2 ist ein um 90° gedrehtes Gelenk im Querschnitt dargestellt, in welchem die Gelenkgabeln 4 und 6 an den Wellenenden 1 und 2 dargestellt sind. Diese sind wie erwähnt in den Kreuzgelenken 9 am Gehäuse 8, welches beispielsweise rohrförmig ausgebildet sein kann, beweglich gelagert. Im mittleren Innenbereich des Gehäuses 8 sind die Endanschläge 13 und 14 dargestellt, welche als ringförmige Erhebungen ausgebildet sind und bis zur Montage des Gelenkes hilfreich sind und gleichzeitig als Sicherheitsanschläge in extremen Endpositionen des Gelenkes dienen. Die Anschlagflächen 13 und 14 sind so ausgebildet, dass die Aufnahme 7 in Extremposition gegenüber der Kugel 5 zuerst bewegungsbegrenzend am Anschlag 13 kontaktiert.

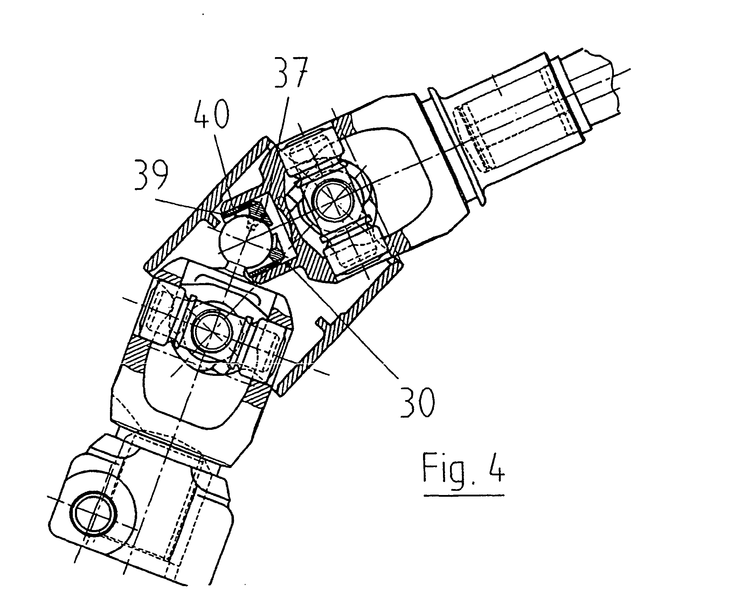

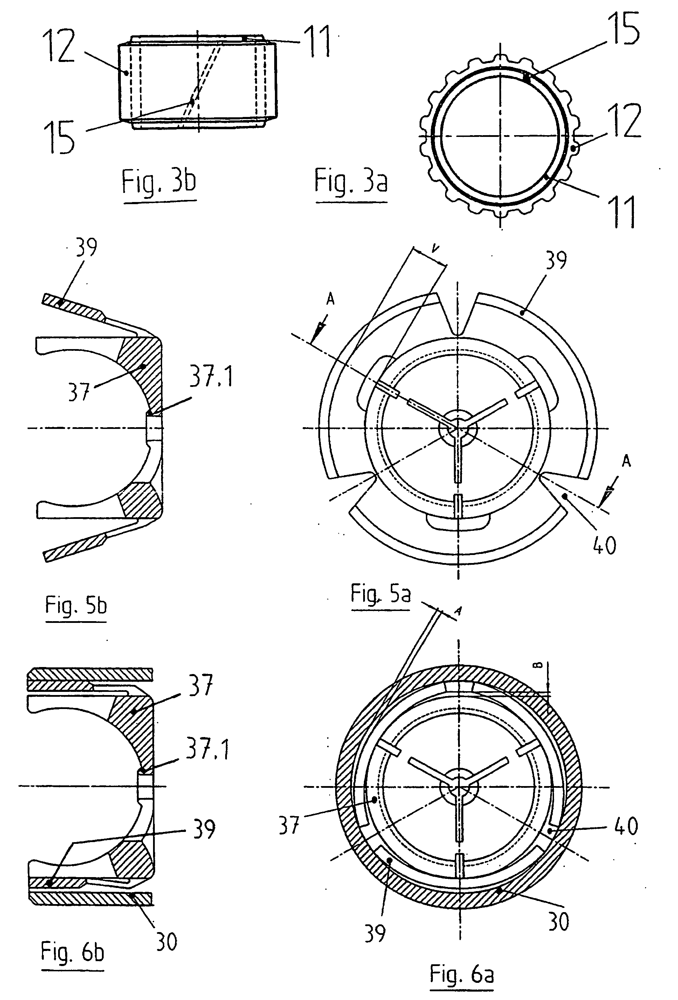

Die Gleitbüchse 11, welche in der Figur 3a im Querschnitt und in der Figur 3b in der Aufsicht dargestellt ist, wird vorteilhafterweise in ihrer Längsachse durch einen Schlitz 15 unterbrochen, so dass die Büchse radial atmen kann und vorgespannt auf die Kugel angepasst werden kann. Dadurch wird erreicht, dass die Büchse spielfrei auf der Kugel 5 dreht und/oder gleitet. Der Schlitz 15 kann sowohl in Längsrichtung oder spiralförmig angelegt werden oder auch auf andere Art, welche die Wandung unterbricht. Gezeigt ist auch im Querschnitt beispielsweise die wellförmige Anordnung des Elastomers 12, welches einen weiteren Freiheitsgrad in der Dimensionierung der elastischen Auslenkung der Lagerung zulässt. Andere Formen, beispielsweise streifenförmig, sind ebenfalls möglich.

Die Variante in Figur 4 zeigt im Querschnitt eine weitere bevorzugte Möglichkeit für den Spielausgleich. Die in der Aufnahme 7, welche hier als Gleitbüchse 30 ausgebildet ist, gleitende Kunststoffgleitführung 37 wird in ihrem Aussenwandbereich mit einer Kunststoffeder 39 versehen, welche ein spielfreies Gleiten ermöglicht. Die Feder 39 ist vorzugsweise mit der Kunststofführung 37 aus einem Stück hergestellt, wobei die Feder vorzugsweise so geschlitzt 40 ist, dass sie radial atmen kann und sich toleranzausgleichend an der Innenfläche der Taumelführung anlegt.

Die Kunststoffgleitführung 37 ist im Detail in Figur 5, in nicht eingebautem Zustand, dargestellt. Figur 5a zeigt die Führung 37 im Querschnitt mit den abgespreitzten Federn 39, welche mit ihrer Federwirkung durch die Vorspannung V für den Toleranzausgleich sorgen. Die Führung 37 kann zur zusätzlichen federelastischen Fixierung an der Gelenkkugel im Zentrum mit zusätzlichen Federlippen 37,1 ausgebildet werden. Die umlaufende Feder 39 ist in Teilen des Umfanges so geschlitzt, dass sie federbeweglich in radialer Richtung atmen kann. Im Längsschnitt, gemäss Figur 5b, ist die abgespreitzte Kunststoffeder 39 dargestellt. In den Figuren 6a und 6b ist dieselbe Gleitführung 37 mit Feder 39 Im Quer- und Längsschnitt dargestellt. Die Feder 37 liegt hierbei an der als Büchse ausgebildeten Aufnahme 7, 30, die Spalte A überbrückend, toleranzausgleichend an. Bei dieser Ausführung kann eine elastisch gelagerte Gleitbüchse 11 verzichtet werden und die Kunststoffgleitführung 37 gleitet direkt in der als zylinderförmigen Büchse ausgebildeten Aufnahme.

## Patentansprüche

1. Lenkwellendoppelgelenk für Kraftfahrzeuge mit zwei Gelenken (9) und damit drehfest verbundenen Wellenenden (1, 2), wobei diese in den Gelenken (9), welche in einem die beiden Gelenke (9) verbindenden Gehäuse (8) beweglich gelagert sind, zwischen den beiden Gelenken (9) durch ein Kugelgelenk (5, 7) miteinander verbunden sind, so dass die Kugel (5) an dem einen Wellenende (2) in einer Aufnahme (7) des anderen Wellenendes (1) um ihren Mittelpunkt drehbar in der Aufnahme (7) federnd gelagert (11,37) ist, **dadurch gekennzeichnet, dass** die Kugel (5) in Richtung der Wellenachse (3) des anderen Wellenendes (2) gleitbeweglich gelagert ist und die Aufnahme (7) eine Büchse (11) enthält, diese umschliesst und dass dazwischen elastisches Material (12) angeordnet ist.

2. Gelenk nach Anspruch 1 **dadurch gekennzeichnet, dass** das elastische Material (12) mindestens an einer der Wandungsflächen, vorzugsweise an der Aussenfläche, wellförmig ausgebildet ist.

3. Gelenk nach Anspruch 1 oder 2 **dadurch gekennzeichnet, dass** das elastische Material (12) ein Elastomer ist, vorzugsweise mit einer Shore-Härte im Bereich 30 bis 80, insbesondere 30 bis 60.

4. Gelenk nach einem der Ansprüche 1 bis 3 **dadurch gekennzeichnet, dass** die Büchse (11) aus einem Sintermetall, vorzugsweise mit einer Traghülse, besteht oder eine Gleitbeschichtung aufweist.

5. Gelenk nach einem der vorhergehenden Ansprüche **dadurch gekennzeichnet, dass** die Büchse (11) derart geschlitzt (15) ist, dass sie in radialer Richtung federbeweglich ist.

6. Gelenk nach einem der vorhergehenden Ansprüche **dadurch gekennzeichnet, dass** die Büchse (11) in jeder Arbeitsstellung die Kugel (5) verschleiss- und toleranzausgleichend und spielfrei umfasst.

7. Gelenk nach Anspruch 1 **dadurch gekennzeichnet, dass** die Büchse (11) als Kunsstoffgleitführung (37) ausgebildet ist, und dass das elastische Material (12) eine Kunststoffeder (39) ist welche in der Aufnahme (7) gleitet.

8. Gelenk nach Anspruch 7 **dadurch gekennzeichnet, dass** die Feder (39) auf deren Umfang Schlitze (40) aufweist, so dass sie in radialer Richtung elastisch beweglich ist.

9. Gelenk nach einem der Ansprüche 1 bis 6 **dadurch gekennzeichnet, dass** an der inneren Wand des Gehäuses(8) Anschlagmittel (13, 14) für die Kugel (5) und die Aufnahme (7) vorgesehen sind.

10. Gelenk nach Anspruch 9 **dadurch gekennzeichnet, dass** die Anschlagmittel (13, 14) so ausgebildet sind, dass die Kugel (5) und die Aufnahme (7) in allen Gelenkextremauslenkungen und im Montagefall die vorgegebenen zulässigen Positionen definieren, wobei die Mittel (13, 14) vorzugsweise so ausgebildet sind, dass im Anschlagfall zuerst die Aufnahme (7) und danach die Kugel (5) kontaktiert.

## Claims

1. Steering shaft double joint for motor vehicles with two joints (9) and shaft ends (1, 2) connected rotationally fixed to this, where said ends in the joints (9), which are mounted moveable in a housing (8) connecting the two joints (9), are connected together by a ball joint (5, 7) between the two joints (9) such that the ball (5) at the one shaft end (2) is sprung-mounted (11, 37) in a receptacle (7) of the other shaft end (1) and rotatable about its centre point in the receptacle (7), **characterised in that** the ball (5) is mounted slide-movable in the direction of the shaft axis (3) of the other shaft end (2), and the receptacle (7) contains a bush (11) and surrounds this, and that arranged in-between is elastic material (12).

2. Joint according to claim 1, **characterised in that** the elastic material (12) is formed corrugated at least on one of the wall surfaces, preferably on the outer surface.

3. Joint according to claim 1 or 2, **characterised in that** the elastic material (12) is an elastomer, preferably with a Shore hardness in the range 30 to 80, in particular 30 to 60.

4. Joint according to any of claims 1 to 3, **characterised in that** the bush (11) comprises a sintered metal, preferably with a carrier sleeve, or has a slip coating.

5. Joint according to any of the previous claims, **characterised in that** the bush (11) is slotted (15) such that it is spring-mobile in the radial direction.

6. Joint according to any of the previous claims, **characterised in that** the bush (11) surrounds the ball (5) in each working position in a manner compensating for wear and tolerance and play-free.

7. Joint according to claim 1, **characterised in that** the bush (11) is formed as a plastic slip guide (37) and that the elastic material (12) is a plastic spring (39) which slides in the receptacle (7).

8. Joint according to claim 7, **characterised in that** the spring (39) has on its periphery slots (40) so that it is elastically mobile in the radial direction.

9. Joint according to any of claims 1 to 6, **characterised in that** on the inner wall of the housing (8) are provided stop means (13, 14) for the ball (5) and the receptacle (7).

10. Joint according to claim 9, **characterised in that** the stop means (13, 14) are formed so that the ball (5) and the receptacle (7) in all joint extreme deflections and in the installation case define the prespecified permitted positions, the means (13, 14) preferably being formed so that on contact with the stop, first the receptacle (7) and then the ball (5) make contact.

## Revendications

1. Joint de cardan double pour arbres de direction dans des véhicules automobiles, comportant deux joints (9) ainsi que des extrémités d'arbre (1, 2) reliées à ces joints (9) d'une manière résistante à la torsion, les extrémités d'arbre étant reliées entre elles - à l'intérieur des joints (9) qui sont montés de façon à être mobiles dans un boîtier (8) de liaison de ces deux joints (9) - au moyen d'une articulation à rotule (5, 7), la rotule (5) située sur l'une des extrémités d'arbre (2) étant montée, de façon élastique (11, 37) et rotative autour de son centre, dans un logement (7) situé sur l'autre extrémité d'arbre (1), **caractérisé en ce que** la rotule (5) est montée de façon coulissante dans le sens axial (3) de l'autre extrémité d'arbre (2), **en ce que** le logement (7) comporte un coussinet (11) enveloppé par le logement (7) et **en ce qu'**entre les deux il est disposé un matériau élastique (12).

2. Joint selon la revendication 1, **caractérisé en ce que** le matériau élastique (12) comporte une configuration ondulée sur au moins une de ses faces de paroi, de préférence sur la face extérieure.

3. Joint selon la revendication 1 ou 2, **caractérisé en ce que** le matériau élastique (12) est un élastomère, de préférence avec une dureté Shore entre 30 et 80, en particulier entre 30 et 60.

4. Joint selon une quelconque des revendications 1 à 3, **caractérisé en ce que** le coussinet (11) est composé d'un métal fritté et inclut, de préférence, un manchon de support, ou qu' il comporte un revêtement lisse.

5. Joint selon une quelconque des revendications précédentes, **caractérisé en ce que** le coussinet (1 1 ) est fendu (15) de manière telle qu'il possède une mobilité élastique dans le sens radial.

6. Joint selon une quelconque des revendications précédentes, **caractérisé en ce que** le coussinet (11), dans chaque position fonctionnelle, enveloppe la rotule (5) sans jeu et de façon à compenser toute tolérance et usure.

7. Joint selon la revendication 1, **caractérisé en ce que** le coussinet (11) est réalisé sous forme de coulisse en matière plastique (37) et que l'élément élastique (12) est un ressort en plastique (39) qui glisse à l'intérieur du logement (7).

8. Joint selon la revendication 7, **caractérisé en ce que** le ressort (39) comporte des fentes (40) sur sa périphérie, si bien qu'il possède une mobilité élastique dans le sens radial.

9. Joint selon une quelconque des revendications 1 à 6, **caractérisé en ce qu'**il est prévu, sur la paroi interne du boîtier (8), des moyens d'arrêt (13, 14) pour la rotule (5) et le logement (7).

10. Joint selon la revendication 9, **caractérisé en ce que** les moyens d'arrêt (13, 14) sont réalisés de telle manière que, lors de tous débattements extrêmes du joint et lors du montage, les positions admissibles prescrites soient définies par la rotule (5) et le logement (7), les moyens d'arrêt (13, 14) étant réalisés, de préférence, de telle façon que le contact se fasse, en cas de butée, d'abord par le logement (7) et ensuite par la rotule (5).
